# EUROPEAN PATENT APPLICATION

(11) **EP 4 435 024 A1**
(43) Date of publication of application: **25.09.2024**
(21) Application number: 23901748.6
(22) Date of filing: 25.12.2023
(51) Int. Cl.: C08F 279/02, C08F 212/08, C08F 257/02, C08F 2/38

(54) **PREPARATION METHOD FOR HIGH IMPACT POLYSTYRENE AND HIGH IMPACT POLYSTYRENE**

(30) Priority: 04.01.2023 CN 202310008214
(71) Applicant: Changzhou Ruihua Chemical Engineering Technology Co., Ltd, Changzhou, Jiangsu 213022 (CN)
(72) Inventor: JIANG, Dongxu, Changzhou, Jiangsu 213022 (CN); LIU, Hui, Changzhou, Jiangsu 213022 (CN); ZHANG, Jun, Changzhou, Jiangsu 213022 (CN); ZHANG, Wenming, Changzhou, Jiangsu 213022 (CN); ZHOU, Haiyan, Changzhou, Jiangsu 213022 (CN); XU, Zhigang, Changzhou, Jiangsu 213022 (CN)
(74) Representative: Patent 42
(86) International application number: PCT/CN2023/141396
(87) International publication number: WO 2024/146400

(57) **Abstract**

The present invention provides a preparation method for high impact polystyrene (HIPS) and a HIPS prepared thereby. In the present invention, a chain transfer agent and/or a low-molecular-weight vinyl aromatic polymer is added to a mixture solution of a vinyl aromatic monomer, a solvent, a rubber and an adjuvant, and prepolymerization is performed under stirring, followed by final polymerization and devolatilization to form HIPS. In the present invention, the morphological structure of a rubber phase can be maintained by appropriately reducing a viscosity of a prepolymerized continuous phase. Within a certain range of shearing rate, the morphological structure of the prepared HIPS can be maintained to improve the impact strength.

## Description

### TECHNICAL FIELD

The present invention relates to the technical field of polymer preparation, and more particularly, to a preparation method for high impact polystyrene (HIPS) and an HIPS prepared thereby.

### Background

Polystyrene (PS) is one of the largest thermoplastic resins in industrial production at present. PS molecules and an aggregated structure thereof determine that PS is a rigid brittle material. Styrene-based copolymers, particularly rubber graft-modified PS resins, have been investigated for use in applications requiring less brittleness. The rubber-modified PS is commonly referred to as HIPS, which extends the range of applications of PS resins.

The final physical properties of HIPS are affected by the molecular weight of continuous phase, the particle size distribution of rubber, and the morphological structure of rubber phase. The particle size distribution and morphological structure of rubber can be controlled by many different parameters, including shearing force, two-phase viscosity and the like. The morphological structure of rubber is usually a "honeycomb" morphological structure, which is usually mixed with a certain amount of PS. Phase separation can be promoted at appropriate shearing rates, while the morphological structure of rubber is easily destroyed by shearing action, resulting in particle breakage. In industrial production, the high impact strength is obtained by adjusting a stirring speed to cause the particle size distribution of rubber to be in the optimum range. However, this optimum stirring speed is not easily obtained because the morphological structure of rubber is damaged to a different extent when the stirring speed is adjusted. The particle size and morphology distribution of the rubber are also affected by a viscosity ratio of a dispersed phase to a continuous phase and a viscosity of the continuous phase. The viscosity of the rubber phase is determined by a rubber level and a viscosity of a rubber solution. The greater the viscosity of the continuous phase is, the more easily the morphological structure of the rubber is destroyed.

The rubber phase in HIPS is generally desired to form a good "honeycomb" morphological structure to obtain better impact properties. This good "honeycomb" morphological structure can be obtained by raising a reaction temperature of prepolymerization or increasing an amount of initiator to increase PS content in the "honeycomb" structure. However, the raising of temperature or the addition of too much initiator makes polymerization too fast, easily resulting in implosion and difficulty in controlling production. In CN1860151B, the "honeycomb" morphological structure is improved by compounding two grafting and non-grafting initiators to increase the impact strength. However, in this method, production becomes complicated. In CN1795218A, the controlled radical polymerization is carried out by using functionalized diolefin rubber to realize the control of the particle size and morphology of rubber. In this method, a raw material of a functionalized diolefin rubber is not readily available.

### Summary

To obtain HIPS, the present invention provides a preparation method for HIPS. The good morphological structure of a rubber phase can be maintained by appropriately reducing a viscosity of a prepolymerized continuous phase. After the viscosity of the continuous phase is appropriately reduced, the destructive effect on the morphological structure of the rubber phase is greatly reduced by shearing or other damage. Within a certain range of shearing rate, the morphological structure of the prepared HIPS can be maintained to improve the impact strength.

In order to achieve the above object, the present invention provides the following technical solutions.

A preparation method for HIPS is provided, including the steps of: adding a chain transfer agent and/or a low-molecular-weight vinyl aromatic polymer to a mixture solution of a vinyl aromatic monomer, a solvent, a rubber and an adjuvant, and performing prepolymerization at a stirring rate of 20-90 r/min, followed by final polymerization and devolatilization to form HIPS.

Preferably, the chain transfer agent is used in an amount of 100-500 ppm in the mixture solution.

Preferably, the chain transfer agent is used in an amount of 150-300 ppm in the mixture solution.

Preferably, the chain transfer agent is one of n-butyl mercaptan, isobutyl mercaptan, n-octylmercaptan, n-dodecyl mercaptan, t-dodecyl mercaptan, t-butyl mercaptan, and α-methylstyrene dimer.

Preferably, the low-molecular-weight vinyl aromatic polymer has a mass ratio of 2-8% in the mixture solution.

Preferably, the low-molecular-weight vinyl aromatic polymer is a low-molecular-weight PS.

Preferably, the low-molecular-weight PS has a weight-average molecular weight (Mw) of 50,000-150,000.

Preferably, the preparation method further includes polymerization in the presence of an initiator.

Preferably, the prepolymerization is performed at a temperature of 110-130°C and the final polymerization is performed at a temperature of 130-170°C.

The present invention also provides an HIPS prepared by the preparation method for HIPS described above.

Compared with the prior art, the present invention has the following advantageous effects.

According to the preparation method for HIPS provided by the present invention, the good morphological structure of the rubber phase can be maintained by appropriately reducing the viscosity of the prepolymerized continuous phase. After the viscosity of the continuous phase is appropriately reduced, the destructive effect on the morphological structure of the rubber phase is greatly reduced by shearing or other damage. Within a certain range of shearing rate, the morphological structure of the prepared HIPS can be maintained to improve the impact strength.

In the present invention, the viscosity of the continuous phase is reduced by the following technical means.
1) A certain amount of chain transfer agent is added into a prepolymerization solution of rubber and styrene.
2) A certain amount of low-molecular-weight PS is added into the prepolymerization solution to adjust the viscosity of the continuous phase.

Through the above methods, it is surprisingly found that the morphological structure of the prepared HIPS is maintained and the impact strength is improved within a certain shearing rate range.

In the prior art methods, the chain transfer agent is mainly used to regulate a molecular weight of a PS resin, and is generally added to a reaction system after prepolymerization. In few methods, mercaptan is also added to the prepolymerization solution, which is not combined with other conditions such as a shearing rate to maintain the morphological structure of rubber phase.

### Brief description of the drawings

FIG. 1 is a transmission electron microscope (TEM) photograph of HIPS in Example 1;
FIG. 2 is a TEM photograph of HIPS in Example 2;
FIG. 3 is a TEM photograph of HIPS in Example 3; and
FIG. 4 is a TEM photograph of HIPS in Comparative Example 1.

### Detailed description

The present invention provides a preparation method for HIPS, including the following steps. A chain transfer agent and/or a low-molecular-weight vinyl aromatic polymer is added to a mixture solution of a vinyl aromatic monomer, a solvent, a rubber and an adjuvant, and prepolymerization is performed at a stirring rate of 20-90 r/min, followed by final polymerization and devolatilization to form HIPS.

The preparation method is preferably a continuous method or a batch method.

In the present invention, the good morphological structure of a rubber phase can be maintained by appropriately reducing a viscosity of a prepolymerized continuous phase. After the viscosity of the continuous phase is appropriately reduced, the destructive effect on the morphological structure of the rubber phase is greatly reduced by shearing or other damage. Within a certain range of shearing rate, the morphological structure of the prepared HIPS can be maintained to improve the impact strength.

In the present invention, the viscosity of the continuous phase is reduced by the following technical means.
1) A certain amount of chain transfer agent is added into a prepolymerization solution of rubber and styrene.
2) A certain amount of low-molecular-weight PS is added into the prepolymerization solution to adjust the viscosity of the continuous phase.

Through the above methods, it is surprisingly found that the morphological structure of the prepared HIPS is maintained and the impact strength is improved within a certain shearing rate range.

In the prior art methods, the chain transfer agent is mainly used to regulate a molecular weight of a PS resin, and is generally added to a reaction system after prepolymerization. In few methods, mercaptan is also added to a prepolymerization solution, which is not combined with other conditions such as a shearing rate to maintain the morphological structure of rubber phase.

To prepare HIPS by implementing a preparation method for HIPS provided by the present invention, rubber needs to be dissolved in a vinyl aromatic monomer and a solvent, i.e., a solution polymerization method.

The rubber may be polybutadiene rubber, SBR, polyisoprene rubber, natural rubber, or a mixture of two or more thereof.

The used solvent is preferably toluene, ethylbenzene or xylene, more preferably a mixed solvent thereof. The purpose of adding a solvent is to reduce a viscosity of a polymerization reaction system, improve the heat transfer effect, and promote a grafting reaction between rubber and a monomer.

The vinyl aromatic monomer preferably includes styrene, or a mixture of styrene and α-methylstyrene.

The adjuvant is preferably at least one of an antioxidant, a plasticizer (preferably white oil), a mold release agent, and an ultraviolet stabilizer. Any additives known to those skilled in the art that can be used to prepare HIPS can be used in the present invention. The additives are not limited to the above-mentioned ones, which are only preferred implementations.

The morphology and particle distribution of the rubber phase of HIPS are affected by the viscosity of two phases. The viscosity of the rubber phase is determined by a rubber level and a viscosity of a rubber solution. Generally, a selected rubber type of the rubber phase is fixed and its viscosity is also fixed. The greater the viscosity of the continuous phase is, the more easily the morphological structure of the rubber is destroyed. In the present invention, by reducing the viscosity of continuous phase, the morphological structure of rubber can be maintained to a maximum extent to improve the impact strength.

In the present invention, the viscosity of continuous phase is reduced by using two technical methods.

Firstly, a certain amount of chain transfer agent is added.

Secondly, a certain amount of low-molecular-weight PS is added.

The molecular weight of PS phase (continuous phase) decreases after the chain transfer agent is added to the prepolymerization reaction system, thereby decreasing the viscosity of PS phase. It is generally easy to understand that the decrease in molecular weight causes a decrease in viscosity.

The chain transfer agent in the present invention is selected from n-butyl mercaptan, isobutyl mercaptan, n-octylmercaptan, n-dodecyl mercaptan, t-dodecyl mercaptan, t-butyl mercaptan, or α-methylstyrene dimer, preferably n-dodecyl mercaptan, t-dodecyl mercaptan, or α-methylstyrene dimer.

The greater the amount of chain transfer agent, the greater the decrease in the molecular weight of the continuous phase (PS phase). However, a substantial decrease in the molecular weight of the PS phase will result in a decrease in the impact strength. Therefore, in the present invention, a range of the amount of chain transfer agent is defined; and the chain transfer agent is used in an amount of 100-500 ppm in a prepolymerization mixture solution, preferably 150-300 ppm.

The low-molecular-weight vinyl aromatic polymer is preferably low-molecular-weight PS, and the addition of the low-molecular-weight PS has a very good effect on reducing the viscosity of the continuous phase. The low-molecular-weight PS has a mass ratio of 2-8% in the mixed solution, which can be self-made or purchased, with an Mw of 50,000-150,000.

Stirring shear plays a crucial role in the properties of HIPS. Under no stirring, polymerization products are formed into highly branched gel; and at an excessively high stirring rate, the morphological structure of the rubber is further damaged, resulting in particle breakage and too small particle sizes, so that the final impact strength is decreased. In the present invention, the stirring shear rate is defined at 20-90 r/min, so that the morphology of the rubber phase can be better maintained in the presence of the chain transfer agent or low-molecular-weight PS.

The products can be polymerized by any method known to those skilled in the art for preparing HIPS, including a continuous method and a batch method. In the present invention, the prepolymerization is performed at a temperature of 110-130°C and the final polymerization is performed at a temperature of 130-170°C. Subsequently, the solvent and residual monomer are removed by a devolatilizer, and the devolatilization temperature and method are well known to those skilled in the art, which are not described in detail herein.

In the present invention, it is also possible to perform the polymerization in the presence of an initiator. The initiator is not particularly limited herein and may be used alone or in combination. The initiator includes (but is not limited to): (1) azo compounds such as 2,2'-azodiisobutyronitrile, 2,2'-azobis(2-methylbutyronitrile), and 2,2'-azobis-(2-dimethylvaleronitrile); (2) peroxydiacyl compounds such as dilauroyl peroxide, eicosanoyl peroxide, and dibenzoyl peroxide; (3) peroxediane compounds such as 2,5-dimethyl-2,5-dimethyl-2,5-di(tert-butylperoxy) hexane, dicumyl peroxide, and 1,3-bis(tert-butylperoxyisopropyl) benzene; (4) peroxide ester compounds such as tert-butyl peroxypivalate, or 2,5-dimethyl-2,5-di(2-ethylhexanolperoxy) hexane; (5) carbonate peroxide compounds such as 2-ethylhexyl tert-amyl peroxocarbonate, and 2-ethylhexyl tert-butyl peroxocarbonate; (6) dicarbonate peroxide compound such as dimyristyl peroxydicarbonate, and bis(4-tert-butylcyclohexyl) peroxydicarbonate; (7) peroxyketone acetal compounds such as 1,1-di-(tert-butylperoxy)-3,3,5-trimethylcyclohexane, or 2,2-bis(4,4-di-tert-butyldioxycyclohexyl)propane; and (8) hydrogen peroxide compounds such as tert-butyl hydroperoxide or cumyl hydroperoxide. The amount of the initiator is not to be excessive, otherwise implosion easily occurs. Based on a total weight of the added monomer mixture of 100 parts by weight, the initiator is preferably used in 0.01-0.03 parts by weight.

In the present invention, the polymerization can be performed in the presence of an initiator. The initiator is preferably used in an amount of 50-300 ppm, more preferably 100-200 ppm.

Hereinafter, technical solutions of the present invention are described clearly and in detail with reference to specific examples.

Hereinafter, raw materials used in Examples and Comparative Examples are described. The following raw materials are only exemplary choices, and those skilled in the art can also choose other raw materials mentioned in the present invention or common adjuvants known to those skilled in the art, which will not be described in detail. The selection of raw materials is as follows.

### Raw materials:

Styrene has a purity of 99.8% and a moisture content lower than 500 ppm, produced by Jiangsu Xinyang Science and Technology Group, with removal of a polymerization inhibitor before use.

Ethylbenzene has a purity of 99.9% and a moisture content lower than 500 ppm, produced by Jiangsu Xinyang Science and Technology Group.

### Rubber:

255p, low cis, has a 1,2 structure content of 8%, produced by Liaoning North-Dynasol Co., Ltd.

S1430: solution polymerized styrene-butadiene rubber (SSBR), has a total styrene content of 41% and a block styrene content of 30%.

N-dodecyl mercaptan is an analytical grade product, produced by Sinopharm Chemical Reagent Co., Ltd.

α-methylstyrene dimer is an analytical grade product, produced by Sinopharm Chemical Reagent Co., Ltd.

Antioxidant 1076 is available from YiXing Tianshi Compound Chemical Co., Ltd.

Low-molecular-weight PS with an Mw of 50,000 and an Mw of 150000, is self-made.

In the following, styrene monomers, ethylbenzene, rubber 255P and antioxidant 1076 are all added in parts by weight.

### Example 1

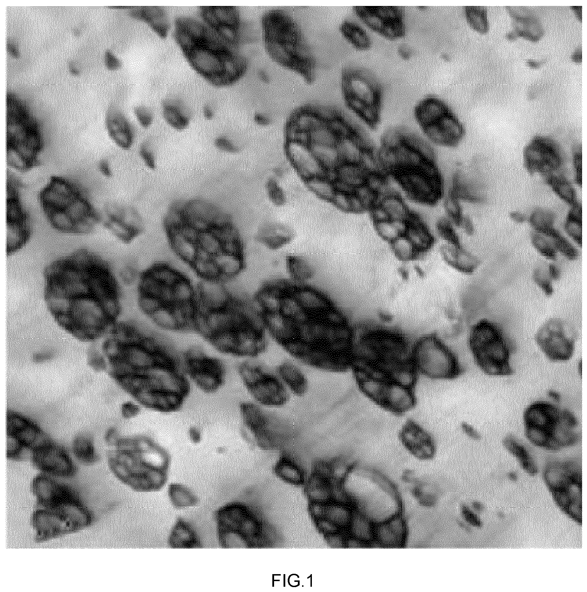

100 parts of styrene monomer, 3 parts of ethylbenzene, 5 parts of rubber 255P and 0.1 parts of antioxidant 1076 were added in a 5 L high pressure reactor. After the rubber was completely dissolved under stirring at normal temperature, 100 ppm of n-dodecyl mercaptan was added into a mixed solution. When a temperature was raised to 125°C, prepolymerization was performed at a stirring rate of 50 r/min until a solid content was 25%; and then the temperature was raised to 150°C for reaction until the solid content was 70%. The material was taken out, and pelletized after residual solvents were removed by a small devolatilizer, to obtain a PS resin. A TEM photograph is shown in FIG 1.

### Example 2

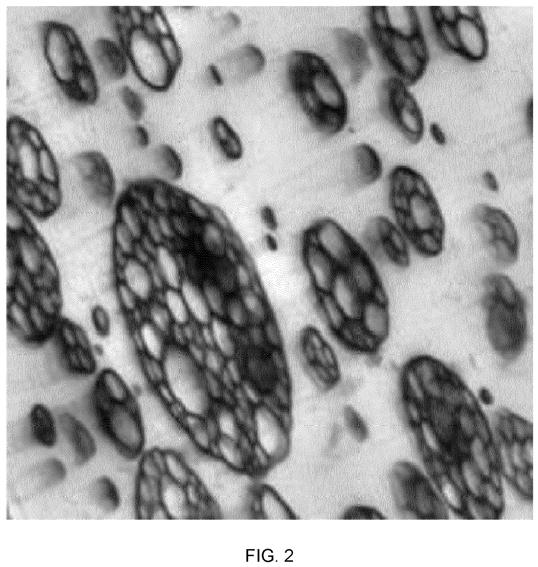

100 parts of styrene monomer, 6 parts of ethylbenzene, 7 parts of rubber 255P and 0.1 parts of antioxidant 1076 were added in a 5 L high pressure reactor. After the rubber was completely dissolved under stirring at normal temperature, 500 ppm of n-dodecyl mercaptan was added into a mixed solution. When a temperature was raised to 115°C, prepolymerization was performed at a stirring rate of 50 r/min until a solid content was 28%; and then the temperature was raised to 160°C for reaction until the solid content was 72%. The material was taken out, and pelletized after residual solvents were removed by a small devolatilizer, to obtain a PS resin. A TEM photograph is shown in FIG 2.

### Example 3

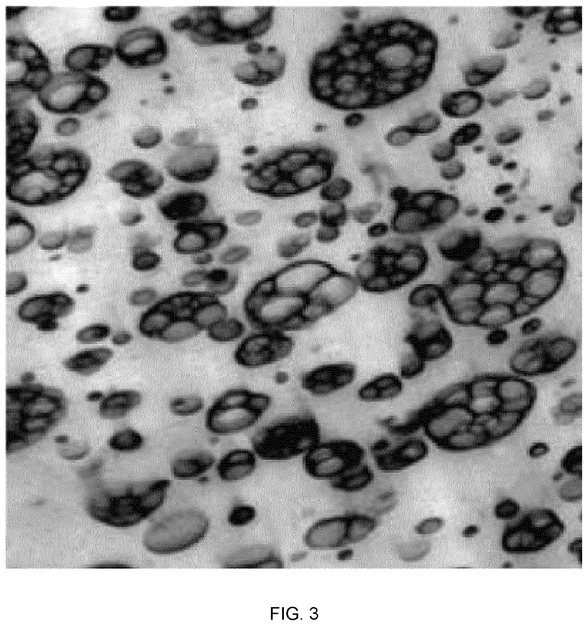

100 parts of styrene monomer, 2 parts of ethylbenzene, 6 parts of rubber 255P and 0.1 parts of antioxidant 1076 were added in a 5 L high pressure reactor. After the rubber was completely dissolved under stirring at normal temperature, a low-molecular-weight PS with a mass fraction of 2% and an Mw of 50,000 was added into a mixed solution. When a temperature was raised to 120°C, prepolymerization was performed at a stirring rate of 50 r/min until a solid content was 29%; and then the temperature was raised to 155°C for reaction until the solid content was 73%. The material was taken out, and pelletized after residual solvents were removed by a small devolatilizer, to obtain a PS resin. A TEM photograph is shown in FIG 3.

### Example 4

100 parts of styrene monomer, 5 parts of toluene, 8 parts of rubber 255P and 0.1 parts of antioxidant 1076 were added in a 5 L high pressure reactor. After the rubber was completely dissolved under stirring at normal temperature, a low-molecular-weight PS with a mass fraction of 8% and an Mw of 150,000 was added into a mixed solution. When a temperature was raised to 120°C, prepolymerization was performed at a stirring rate of 50 r/min until a solid content was 30%; and then the temperature was raised to 155°C for reaction until the solid content was 68%. The material was taken out, and pelletized after residual solvents were removed by a small devolatilizer, to obtain a PS resin.

### Example 5

The difference from Example 1 was that n-dodecyl mercaptan was added in an amount of 150 ppm.

### Example 6

The difference from Example 1 was that n-dodecyl mercaptan was added in an amount of 200 ppm.

### Example 7

The difference from Example 1 was that n-dodecyl mercaptan was added in an amount of 250 ppm.

### Example 8

The difference from Example 1 was that n-dodecyl mercaptan was added in an amount of 300 ppm.

### Example 9

The difference from Example 3 was that a low-molecular-weight PS had a mass fraction of 5%.

### Example 10

The n-dodecyl mercaptan in Example 1 was replaced by α-methylstyrene dimer, and other conditions were the same as in Example 1.

### Example 11

The stirring rate of prepolymerization in Example 1 was changed to 90 r/min, and other conditions were the same as in Example 1.

### Example 12

The rubber in Example 4 was replaced by S1430, and other conditions were the same as in Example 4.

### Example 13

The difference from Example 1 was that n-dodecyl mercaptan and low-molecular-weight PS with an Mw of 100,000 were added into a mixed solution.

### Example 14

The difference from Example 1 was that 100 ppm of initiator was also added when n-dodecyl mercaptan was added.

### Example 15

The difference from Example 3 was that 150 ppm of initiator was also added when low-molecular-weight PS was added.

### Example 16

The difference from Example 9 was that 200 ppm of initiator was also added when low-molecular-weight PS was added.

### Example 17

The difference from Example 1 was that a stirring rate was 20 r/min.

### Comparative Example 1

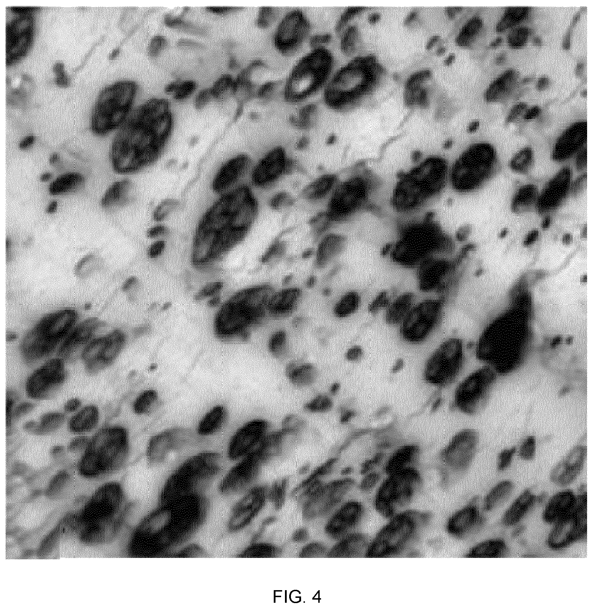

The difference from Example 1 was that no n-dodecyl mercaptan was added in Comparative Example 1 to obtain a PS resin. A TEM photograph is shown in FIG. 4.

### Comparative Example 2

Low-molecular-weight PS in Example 4 was added after completion of the prepolymerization, and other conditions were the same as in Example 4.

### Comparative Example 3

N-dodecyl mercaptan in Example 2 was used in an increased amount of 700 ppm, and other conditions were the same as in Example 2.

### Comparative Example 4

A stirring rate of prepolymerization was changed to 110 r/min, and other conditions were the same as in Example 1.

### Comparative Example 5

The difference from Example 12 was that no low-molecular-weight PS was added in Comparative Example 5.

The impact strengths and melt indexes of Examples 1-17 and Comparative Examples 1-5 were tested according to the following standards.

An izod notched impact strength was tested according to ISO180-A.

A melt index was measured according to ISO1133 at a temperature of 200°C and a balance weight of 5 kg.

Test results of Examples 1-17 and Comparative Examples 1-5 are shown in Table 1 below.

**Table 1 Test results**

| Example | Melt index/(g/10 min) | Izod impact strength/(KJ/m²) | |
|---|---|---|---|
| Example 1 | 2.8 | | 13.0 |
| Example 2 | 5.8 | | 12 |
| Example 3 | 4.0 | | 14 |
| Example 4 | 3.3 | | 13 |
| Example 5 | 3.2 | | 13.5 |
| Example 6 | 3.6 | | 13.6 |
| Example 7 | 4.1 | | 13.2 |
| Example 8 | 4.8 | | 13.5 |
| Example 9 | 3.8 | | 13.2 |
| Example 10 | 3.0 | | 13.2 |
| Example 11 | 3.1 | | 12.8 |
| Example 12 | 3.8 | | 9 |
| Example 13 | 4.0 | | 12.8 |
| Example 14 | 4.1 | | 13.2 |
| Example 15 | 3.9 | | 14.2 |
| Example 16 | 4.5 | | 13.5 |
| Example 17 | 3.5 | | 13.2 |
| Comparative Example 1 | 2.6 | | 11.5 |
| Comparative Example 2 | 3.0 | | 10.5 |
| Comparative Example 3 | 7 | | 9.5 |
| Comparative Example 4 | 3.0 | | 10.5 |
| Comparative Example 5 | 3.5 | | 4.5 |

As can be seen from the above table, by comparing Example 1 with Comparative Example 1, Example 4 with Comparative Example 2, and Example 4 with Comparative Example 5, the impact resistance property of HIPS resin can be significantly improved by adding mercaptan or low-molecular-weight PS in the prepolymerization. As can be seen from Comparative Example 3 and Comparative Example 4, when the used amount of mercaptan or the stirring speed exceeds the defined range of the present invention, the impact strength of the product decreases significantly. A melt flow rate tested by the implementation method is 3 g/10 min or greater, which can meet the market demand for the melt flow rate of the product. It can be seen from FIGS. 1-3 that the HIPS prepared in Examples 1-3 has relatively perfect honeycomb structures (in which, the attached drawings in the specification of the present invention are only exemplary, and are used for illustrating that the relatively perfect honeycomb structures have been prepared in the present invention), that is, the rubber phase contains more PS, and the morphological structure of the rubber is maintained. In contrast, it can be seen from FIG. 4 that the rubber phase in Comparative Example 1 does not have the perfect morphological structures as shown in FIGS. 1-3, and the morphology of the rubber phase is not maintained, therefore, the impact strength decreases.

Examples 5-8 have the highest impact strength. By comparing Example 10 with Example 1, it can be seen that the change of types of chain transfer agents has little effect on impact strength. By comparing Example 12 with Comparative Example 5, the impact strength of Example 12 is much higher than that of Comparative Example 5 when the low-molecular-weight PS and the rubber S1430 with low impact strength are added in Example 12 and no low-molecular-weight PS is added in Comparative Example 5.

The comparison between other examples and comparative examples will not be described in detail.

In the present invention, only TEM photographs of some examples and comparative examples are listed for better understanding of the present invention, and other examples and comparative examples are similar in principle and will not be listed one by one.

The above is only the preferred embodiment of the present invention, but the scope of protection of the present invention is not limited to this. Within the technical scope disclosed by the present invention, any equivalent substitutions or changes made by those skilled in the art according to the technical solution and the improvement conception of the present invention are to be covered by the scope of protection of the present invention.

## Claims

1. A preparation method for high impact polystyrene (HIPS), comprising the steps of: adding a chain transfer agent and/or a low-molecular-weight vinyl aromatic polymer to a mixture solution of a vinyl aromatic monomer, a solvent, a rubber and an adjuvant, and performing prepolymerization at a stirring rate of 20-90 r/min, followed by final polymerization and devolatilization to form HIPS,
wherein
the vinyl aromatic monomer preferably comprises styrene, or a mixture of styrene and α-methylstyrene;
the solvent is preferably toluene, ethylbenzene, xylene, or a mixture thereof; and
the rubber is preferably styrene-butadiene rubber (SBR), polybutadiene rubber, polyisoprene rubber, natural rubber, or a mixture of two or more thereof.

2. The preparation method for HIPS according to claim 1, wherein the chain transfer agent is used in an amount of 100-500 ppm in the mixture solution.

3. The preparation method for HIPS according to claim 2, wherein the chain transfer agent is used in an amount of 150-300 ppm in the mixture solution.

4. The preparation method for HIPS according to claim 1, wherein the chain transfer agent is one of n-butyl mercaptan, isobutyl mercaptan, n-octylmercaptan, n-dodecyl mercaptan, t-dodecyl mercaptan, t-butyl mercaptan, and α-methylstyrene dimer.

5. The preparation method for HIPS according to claim 1, wherein the low-molecular-weight vinyl aromatic polymer has a mass ratio of 2-8% in the mixture solution.

6. The preparation method for HIPS according to claim 1, wherein the low-molecular-weight vinyl aromatic polymer is a low-molecular-weight polystyrene (PS).

7. The preparation method for HIPS according to claim 6, wherein the low-molecular-weight PS has a weight-average molecular weight (Mw) of 50,000-150,000.

8. The preparation method for HIPS according to claim 1, further comprising polymerization in the presence of an initiator.

9. The preparation method for HIPS according to claim 1, wherein the prepolymerization is performed at a temperature of 110-130°C and the final polymerization is performed at a temperature of 130-170°C.

10. An HIPS prepared by a preparation method for HIPS according to any one of claims 1 to 9.
